(19) Europäisches Patentamt / European Patent Office / Office européen des brevets

(11) **EP 2 228 620 B1**

(12) **EUROPEAN PATENT SPECIFICATION**

(45) Date of publication and mention
of the grant of the patent:
**27.04.2011 Bulletin 2011/17**

(51) Int Cl.:
*G01B 5/016* ^(2006.01)    *G01B 11/00* ^(2006.01)
*G01B 5/012* ^(2006.01)    *G01B 7/012* ^(2006.01)

(21) Application number: **10155699.1**

(22) Date of filing: **05.03.2010**

(54) **Shape measurement device probe and shape measurement device**

Formmessvorrichtungssonde und Formmessvorrichtung

Sonde de dispositif de mesure de forme et dispositif de mesure de forme

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **12.03.2009 JP 2009059470**

(43) Date of publication of application:
**15.09.2010 Bulletin 2010/37**

(73) Proprietor: **Panasonic Corporation
Kadoma-shi
Osaka 571-8501 (JP)**

(72) Inventors:
• **HATTA, Kenichiro**
  **Osaka 540-6207 (JP)**
• **FUNABASHI, Takanori**
  **Osaka 540-6207 (JP)**

(74) Representative: **Eisenführ, Speiser & Partner
Postfach 10 60 78
28060 Bremen (DE)**

(56) References cited:
**EP-A1- 1 906 135      DE-A1- 3 715 698
JP-A- 2006 284 410    US-A1- 2007 126 314**

## Description

Field of the Invention

The present invention relates to a shape measurement device probe and a shape measurement device which perform measurements of arbitrary three-dimensional shapes with high precision and a low measurement force. More specifically, in order to meet needs in industrial fields in which miniaturization and precision have been advancing, the present invention relates to a shape measurement device probe and a three-dimensional shape measurement device which are capable of measuring arbitrary shapes with higher precision and a lower measurement force and are capable of performing measurements of the internal surfaces and diameters of holes, measurements of shapes and outer diameters of external surfaces, and measurements of inclinations, eccentricities, fine surface shapes and the like of lens surfaces of non-spherical lenses with respect to shapes and outer diameters thereof, with high precision of sub-micrometers or less, a low measurement force of 1 mN or less, excellent responsivity, high speed and excellent reliability.

Background of the Invention

There are a conventional three-dimensional shape measurement device and a conventional shape measurement device probe capable of scan-measuring external surfaces, internal surfaces, diameters of holes, and the like of measuring objects with a low measurement force of 1 mN or less, as described in WO2007/ 135857. Figs. 8 and 9 illustrate the conventional three-dimensional shape measurement probe disclosed in WO2007/ 13585

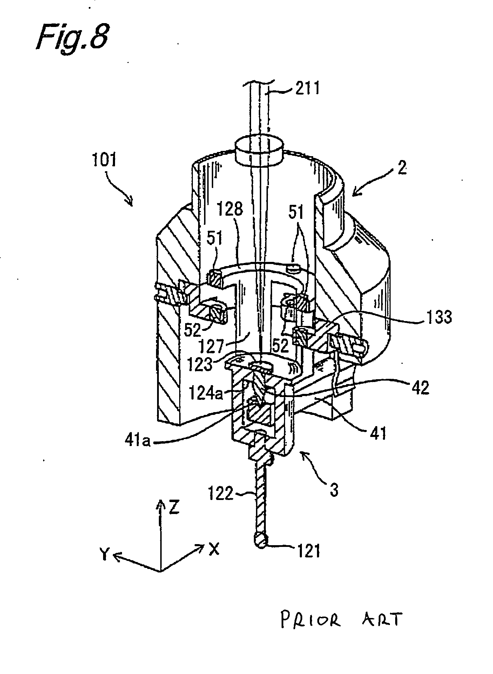

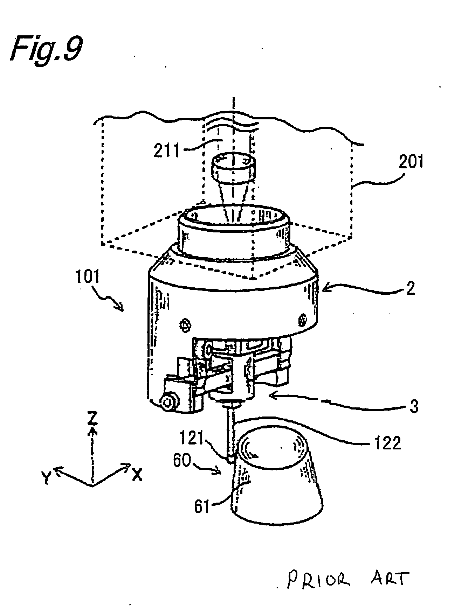

A probe 101 illustrated in Figs. 8 and 9 is adapted so that a supporting point member 42, a swing movement portion 3 to which the supporting point member 42 is attached, and a stylus 121 attached to the swing movement portion 3 can swing in any of X and Y directions about an apical end of the supporting point member 42 fitted in a conical groove 41a that is formed in an upper surface of a mounting platform 41 secured to a cylindrical-shaped attachment portion 2.

Movable-side magnets 51 secured to the swing movement portion 3 and fixed-side magnets 52 secured to a fixed-side holding member 133 attached to the attachment member 2 are placed to face each other. The movable-side magnets 51 and the fixed-side magnets 52 are fixed in such directions that an attractive force acts between each pair of the movable-side magnet 51 and the fixed-side magnet 52. Due to this attractive force, the swing movement portion 3 is subjected to a downward force. This causes the apical end of the supporting point member 42 to be pressed against the center of the conical groove 41a in the mounting platform 41 so as to come into contact therewith, thereby preventing positional deviation and the like of the swing movement portion 3. Further, by the attractive force between the movable-side magnets 51 and the fixed-side magnets 52, the swing movement portion 3 is biased so as to be at a neutral position where an arm 122 including the stylus 121 at its tip end extends in the vertical direction.

Even when the movable-side magnets 52 or the fixed-side magnets 52 are replaced with members made of magnetic material, it is possible to cause an attractive force to act therebetween, which enables biasing the swing movement portion 3 so as to be at the neutral position to cause the arm 122 including the stylus 121 at its tip end to extend in the vertical direction.

When a measurement is performed for the shape of a surface 61 of a measuring object 60, the stylus 121 is pressed against the surface 61 to be measured with a predetermined pressing force. Namely, when the measurement of the shape is performed, the stylus 121 contacts with the measuring object 60 in a state where the stylus 121 applies a small measurement force to the measuring object 60. A reaction force acts on the stylus 121 against the measurement force, which causes the swing movement portion 3 to incline about the apical end of the supporting point member 42.

The shape measurement device including the probe 101 is adapted to move the probe 101 along the surface 61 to be measured for scanning it while performing control so that the small measurement force of the tip end of the stylus 121 is constant, namely, the inclination angle of the swing movement portion 3 is constant and, further, is adapted to measure and calculate the shape of the surface of the surface 61 to be measured based on the positional relationship between the probe 101 and a reference surface, which is detected using a laser length measurement device and a reference plane mirror. As a method for detecting the position of the stylus 121 contacting with the measuring object 60, measurement laser light 211 from the shape measurement device is reflected by a mirror 123 secured to the center portion of the swing movement portion 3 and, then, the reflected light is received, in order to detect information about the coordinate of the swing movement portion 3 in the vertical direction and about the inclination angle of the swing movement portion 3, and, through calculations using these values, the position of the stylus 121 is determined. Therefore, with the shape measurement device including the shape measurement device probe 101, it is possible to perform, with extremely high precision, measurements of the surface 61 to be measured having an angle of intersection from the range of 0 to 30 degrees at the maximum between a tangential direction thereof and the vertical direction.

However, the surface 61 which can be measured with the structure disclosed in WO2007/ 135857 is limited to a surface having an intersection angle in the range of 0 to 30 degrees at the maximum between the tangential direction thereof and the vertical direction. More specifically, if a measurement is performed on, for example, a horizontal surface, namely, a surface having an intersection angle of 90 degrees between the tangential line thereof and the vertical direction, a force in the vertical upward direction acts on the tip end of the stylus 121 and, therefore, the swing movement portion 3 does not swing about the apical end of the supporting point member 42 serving as the supporting point (the swing movement portion 3 does not incline). This makes it impossible to perform detection of the position of the stylus 121, thereby making it impossible to perform a measurement of the shape.

Documents JP2006284410 and US2007/0126314 also show low-force, high-precision contacting shape measuring apparatuses.

Summary of the Invention

Accordingly, it is an object of the present invention to overcome the aforementioned problems, namely, to provide a probe capable of performing a measurement of a surface with high precision and a low measurement force, even when the surface to be measured has a shape similar to a horizontal surface, as well as when it has a substantially vertically elongated shape.

The present invention is configured as below to achieve the above objects.

A first aspect of the present invention provides a shape measurement device probe comprising an attachment portion for attachment to a shape measurement device, a linear movement portion supported by the attachment portion so as to be linearly movable only in a vertical direction, a swing movement portion including an arm having at a tip end thereof a stylus for contacting with a surface to be measured of a measuring object, a connection mechanism including a supporting point portion provided in the swing movement portion and a mounting portion provided in the linear movement portion for placing the supporting point portion thereon, and being adapted to connect the swing movement portion to the linear movement portion so that the swing movement portion can swing with the supporting point portion as a supporting point, a first biasing mechanism including a swing-side member secured to the swing movement portion and a non-swing-side member secured to the linear movement portion so as to be opposed to the swing-side member with an interval in the vertical direction, the swing-side member and the non-swing-side member being adapted to generate a magnetic attractive force for biasing the swing movement portion so that the arm is oriented in the vertical direction, and a second biasing mechanism including a movable-side member secured to the linear movement portion and a fixed-side member secured to the attachment portion so as to be opposed to the movable-side member with an interval in the vertical direction, the movable-side member and the fixed-side member being adapted to generate a magnetic force for biasing the linear movement portion upward in the vertical direction so that the linear movement portion is maintained to be non-contact status with the attachment portion in the vertical direction.

There will be described operations of the shape measurement device probe according to the first aspect in a case where the surface to be measured is similar to a horizontal surface.

A reaction force to a measurement force, which acts from the measuring object on the stylus contacting with the surface to be measured, can be divided into forces in the horizontal direction and the vertical upward direction.

The force in the horizontal direction causes the swing movement portion to swing about the supporting point with respect to the linear movement portion by the connection mechanism. Further, due to a magnetic force between the swing-side member and the non-swing-side member in the first biasing mechanism, a biasing force which biases the arm in the vertical direction acts on the swing movement portion. Due to the biasing force, a restoration force acts on the swing movement portion in such a way as to maintain the attitude of the swing movement portion. This restoration force induces a small force for causing the stylus to press the measuring object, namely, a small measurement force.

The force in the vertical upward direction causes a force in the vertical upward direction to act on the swing movement portion including the supporting point portion. This force acts to separate the supporting point portion from the mounting portion. However, due to the magnetic forces of the movable-side member and the fixed-side member in the second biasing mechanism, the linear movement portion is biased in the vertical upward direction. Further, due to the balance among this biasing force, a weight of the linear movement portion itself, a weight of the swing movement portion itself which acts on the linear movement portion through the supporting point portion, and the component in the vertical direction out of the reaction force transmitted to the swing movement portion, the linear movement portion moves in the vertical upward direction. Namely, the balance among these forces moves the mounting portion in the vertical upward direction. This prevents separation of the supporting point portion from the mounting portion.

Preferably, the mounting portion of the connection mechanism includes a conical groove in an upper portion, the supporting point portion of the connection mechanism includes a needle-shaped protrusion protruding downward in the vertical direction from the swing movement portion, and the swing movement portion is connected so as to swing with a contact portion of a deepest portion of the conical groove and an apical end of the supporting portion member as a center of swing

The connection mechanism forms the supporting point of the swing movement portion with the conical groove and the apical end, which prevents the positional deviation of the supporting point. Further, the swing-side member and the non-swing-side member are arranged so that forces are applied thereto in directions that the apical end fitted in the conical groove is not disengaged therefrom, namely, the supporting point portion and the mounting portion are pressed against each other. This prevents both of them from being deviated from each other due to the influences of the gravity and magnetic forces.

The swing-side member and the non-swing-side member are both formed of permanent magnets and are placed so that opposite magnetic poles face each other.

Alternately, one of the swing-side member and the non-swing-side member is formed of a permanent magnet and the other one of them is made of a magnetic material.

The movable-side member is positioned above the fixed-side member, and the movable-side member and the fixed-side member are placed so that opposite magnetic poles face each other for generating magnetic repulsive forces.

Alternately, the movable-side member is positioned below the fixed-side member, and the movable-side member and the fixed-side member are placed so that same magnetic poles face each other for generating magnetic attractive forces.

Preferably, the attachment portion includes a bearing portion for supporting the linear movement portion in a manner of a non-contact pneumatic bearing structure so that the linear movement portion can move only in the vertical direction.

Preferably, there is provided a magnetic circuit portion which forms a magnetic circuit resisting rotation of the linear movement portion in a horizontal direction about an axis thereof.

The swing movement portion includes a mirror for reflecting a measurement laser.

A second aspect of the present invention provides a shape measurement device comprising the shape measurement device probe having the mirror for reflecting the measurement laser, a vertical movement section to which the shape measurement device probe is attached, a focus detection section which detects an amount of relative movement of the shape measurement device probe with respect to the vertical movement section in the vertical direction based on reflected light resulting from reflection of the measurement laser by the mirror, and a measurement point information determination section which detects an inclination angle of the swing movement portion of the shape measurement device probe with respect to the vertical direction based on the reflected light resulting from reflection of the measurement laser by the mirror, and which determines information about positions of measurement points where the stylus contacts with the surface to be measured.

The supporting point portion is located at a position fixed with respect to the linear movement portion, and the position of the supporting point can be moved only in the vertical direction. Accordingly, it is also possible to easily obtain information about the position of the supporting point, provided that information about the position in the vertical direction can be obtained from the light reflected by the mirror attached to the swing movement portion, which enables the measurement point information determination section to execute calculations with high precision. If the position of the supporting point, namely, the position of the center of rotation of the swing movement portion, is unknown, no matter how precisely the inclination angle of the swing movement portion can be determined, it is impossible to determine the center of rotation of the swing movement portion only from the information about the inclination angle, eventually inducing errors in calculating information about the position of the measurement point.

The measurement point information determination section can be also structured to include an inclination angle detecting section which detects the inclination angle, a stylus position calculating section which converts an angle signal obtained from the inclination angle detecting section into an amount of displacement of the stylus with respect to the attachment portion included in the shape measurement device probe, a position coordinate calculating section which determines coordinate values of the relative position of the measurement point with respect to the attachment portion using the measurement laser, and an adder which adds the amount of displacement of the stylus to the coordinate values of the relative position for determining information about the position of the measurement point.

Further, there may be further included a stage which moves in a two-dimensional manner or a three-dimensional manner along the surface to be measured, and a control device which controls the stage so that the vertical reaction force caused by contacting with the surface to be measured, namely, the measurement force, has a predetermined value, using the amount of relative movement of the measuring surface contact portion in the vertical direction with respect to the mounting portion detected by the focus section, or using the inclination angle detected by the inclination angle detecting section.

With the shape measurement device probe and the shape measurement device according to the present invention, the swing movement portion including the arm having the stylus at its tip end is capable of moving in the vertical direction together with the linear movement portion which is connected thereto through the connection mechanism, as well as being capable of swinging with the supporting point portion as the supporting point. This enables a measurement of a surface of an arbitrary shape, with high precision and a small measurement force, without limiting the inclination angle of the surface to be measured, namely, even when the surface to be measured is similar to a horizontal surface as well as when it has a substantially vertically elongated shape.

Brief Description of the Drawings

These and other characteristics of the invention will be clear from the following description of a preferential form of the embodiment, given as a non-restrictive example, with reference to the attached drawings wherein:

Fig. 1 is a perspective view of a shape measurement probe according to a first embodiment of the present invention taken along an XY plane;

Fig. 2 is a perspective view of the shape measurement probe according to the first embodiment of the present invention, taken along an YZ plane;

Fig. 3 is an explanation view of the placement of magnets in the shape measurement probe according to the first embodiment of the present invention;

Fig. 4 is a view illustrating the difference in the shape measurement probe according to the first embodiment of the present invention between when it contacts with a measuring object and when it does not contact therewith;

Fig. 5 is a view illustrating an example of a shape measurement device provided with the probe illustrated in Fig. 1;

Fig. 6 is a view illustrating another example of a shape measurement device provided with the probe illustrated in Fig. 1;

Fig. 7 is a view illustrating the structures of a measurement point information determination section and a focus detection section included in the shape measurement device illustrated in Fig. 6;

Fig. 8 is a view of a probe included in a conventional shape measurement device disclosed in WO2007/135857; and

Fig. 9 is a view of the probe included in the conventional shape measurement device disclosed in WO2007/135857.

Detailed Description of a Preferential Embodiment

Hereinafter, a shape measurement device probe according to an embodiment of the present invention and a shape measurement device provided with the shape measurement device probe will be described in detail with reference to the drawings. It should be note that the same reference numerals denote similar components throughout the drawings. Further, an attachment portion 2, a swing movement portion 3, a linear movement portion 6 and the like, which will be described later, can be either integrally formed or constituted by plural members or components unless otherwise specified.

The shape measurement device is capable of measuring an arbitrary shape such as a lens shape, a hole shape of a component, or an outer shape of the component with high precision on the order of nanometers. Regarding a lens, measuring objects include, in addition to a shape of a lens surface, circularity of a lens side surface, an inclination of the lens surface with respect to the lens side surface, positional deviation expressed by an eccentricity and the like. Furthermore, it is also possible to measure shapes of holes in a motor bearing, a nozzle for an ink jet printer, a fuel injection nozzle for an automobile engine and the like which are required to have extremely high precision. Further, it is also possible to measure a shape of a slot portion which is formed in a fluid bearing to accommodate a lubricant and the inner diameter, a cylindricity and the like of a micro air slide included in the shape measurement device. Moreover, measuring objects can also include trench portions in semiconductor circuit patterns.

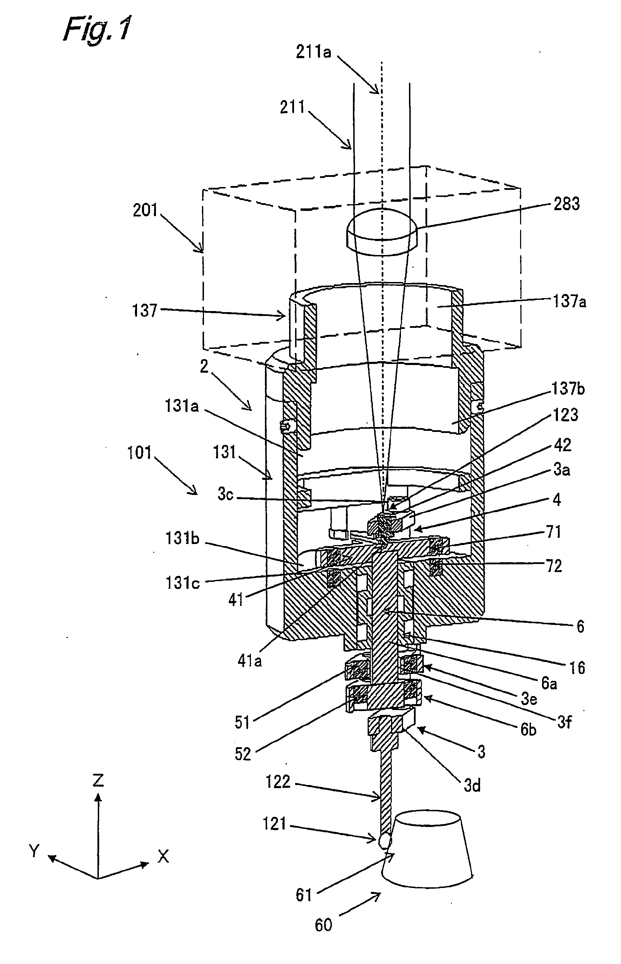

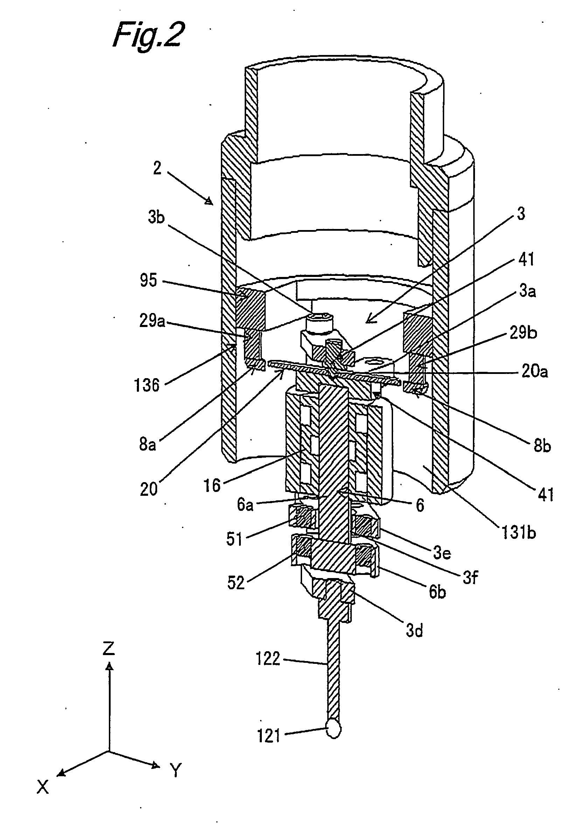

Firstly, the shape measurement device probe will be described. Figs. 1 and 2 are perspective views of the shape measurement probe for use in the shape measurement device according to an embodiment of the present invention. A shape measurement device probe (hereinafter, simply referred to as a probe) 101 illustrated in Figs. 1 and 2 includes the attachment portion 2, the swing movement portion 3, a connection mechanism 4, and the linear movement portion 6. The swing movement portion 3 (the measuring surface contact portion) includes an arm 122 having, at its lower end, a stylus 121 as a portion contacting with the surface 61 to be measured of a measuring object 60 to be subjected to measurement. The probe 101 according to the present embodiment is characterized by having a structure capable of translationally moving the swing movement portion 3 (the arm 122) only in the vertical direction, in addition to having a structure capable of inclining the swing movement portion 3 (the arm 122) in an arbitrary horizontal direction, namely, in any of the X and Y directions. More specifically, the linear movement portion 6 is held so that the linear movement portion 6 can move translationally only in the vertical direction with respect to the attachment portion 2, and the swing movement portion 3 is coupled to the movable member 6 through the connection mechanism 4 so that the swing movement portion 3 can incline in an arbitrary horizontal direction with respect thereto.

The attachment portion 2 is fixedly or detachably mounted to a shape measurement device 201. The attachment portion 2 according to the present embodiment is a block member. The swing movement portion 3 can swing and, also, the linear movement portion 6 can move in the vertical direction, while the attachment portion 2 is a fixed member. The attachment portion 2 has, at its center portion, laser openings 137a, 137b and 131a which penetrate therethrough for allowing measurement laser light 211 emitted from the shape measurement device 201 to pass therethrough and has a cylindrical shape in its entirety. The attachment portion 2 includes a cylindrical main body 131 having openings at its opposite ends, and a cylindrical attachment member 137 similarly having openings at its opposite ends, which is secured to the upper end of the main body 131.

The attachment member 137 in the attachment portion 2 is secured to the shape measurement device 201 or is detachably mounted to the shape measurement device 201 through fitting. The aforementioned laser openings 137a and 137b are formed at the upper end and the lower end of the attachment member 137.

The main body 131 in the attachment portion 2 has the laser opening 131a formed at the center portion of its upper end, and also has a swinging opening 131b formed at its lower end to provide a space allowing the swing movement portion 3 to swing.

The main body 131 in the attachment portion 2 houses inside thereof the upper end side of the swing movement portion 3 (the portion including a mounting platform 41, which will be described later), the connection mechanism 4, and the upper end side of the linear movement portion 6. On the other hand, the lower end side of the swing movement portion 3 (including a middle portion 3e and a lower end portion 3d, which will be described later), and the lower end side of the linear movement portion 6 (including a magnet holding portion 6b, which will be described later) are protruded downwardly from the swinging opening 131b at the lower end of the main body 131 in the attachment portion 2.

A supporting portion 13 1 c having a narrow-width bar shape extending in a horizontal direction is coupled at its opposite ends to the inner wall of the swinging opening 131b at the lower end of the main body 131. The supporting portion 131c is provided, at the center thereof in the longitudinal direction, with a bearing portion 16 which supports the linear movement portion 6 movably in the vertical direction. Further, a pair of fixed-side magnets 72 are mounted to the upper surface of the supporting portion 131c at its opposite ends in the longitudinal direction. These fixed-side magnets 72 are opposed to movable-side magnets 71 (which will be described later in detail) included in the linear movement portion 6 with an interval interposed therebetween in the vertical direction.

The connection mechanism 4 supports the swing movement portion 3 on the linear movement portion 6 so that the swing movement portion 3 can swing in any directions intersecting with an optical axis 211a of the measurement laser light 211 which is directed to a mirror 123. Further, in the present embodiment, the optical axis 211a of the measurement laser light 211 is coincident with the direction of a Z axis along the vertical direction.

In the present embodiment, the connection mechanism 4 is constituted by the mounting platform (the mounting portion) 41 secured to the upper end of the linear movement portion 6, and a supporting point member (a supporting point portion) 42 attached to the swing movement portion 3. A conical groove 41a is formed in the upper surface of the mounting platform 41, and a apical end of the supporting point member 42 formed as a needle-shaped protrusion is fitted in the groove 41a. The mounting platform 41 and the supporting point member 42 are formed so that the apical end of the supporting point member 42 contacts with the lowermost portion of the conical groove 41a. With this structure, the swing movement portion 3 is coupled to the mounting platform 41 (the linear movement portion 6) so as to swing in any horizontal direction (in any of the X and Y directions), so that the portion of the apical end of the supporting point member 42 which contacts with the deepest portion of the conical groove 41a serves as the swinging center or the supporting point.

The swing movement portion 3 includes the stylus 121 contacting with the surface 61 to be measured of the measuring object 60, and the mirror 123 for reflecting the measurement laser light 211 passed through the attachment portion 2. Further, the swing movement portion 3 swings with respect to the linear movement portion 6 according to the displacement of the stylus 121 in conformance to the shape of the surface 61 to be measured. The swing movement portion 3 includes an upper portion 3a housed within the main body 131 in the attachment portion 2, a pair of coupling portions 3b and 3c extending downwardly from the opposite ends of the upper portion 3a, and the lower portion 3d having opposite ends coupled with the lower ends of the coupling portions 3b and 3c positioned under the attachment portion 2. The swing movement portion 3 has a rectangular frame shape in its entirety. Further, the swing movement portion 3 includes the middle portion 3e below the attachment portion 2 but above the lower portion 3d. This middle attachment portion 3e is also coupled at its opposite ends to the coupling portions 3b and 3c.

On the lower surface of the upper portion 3a of the swing movement portion 3 (the inner upper wall of the swing movement portion 3), there is provided the needle-shaped supporting point member 42 so as to protrude downwardly. The supporting point member 42 forms a portion of the connection mechanism 4 as described above. The upper portion 3a is placed above the mounting platform 41 on the linear movement portion 6, which forms a portion of the connection mechanism 4 similarly, with an interval interposed therebetween, and the supporting point member 42 is fitted in the groove 41a in the mounting platform 41. On the other hand, the mirror 123 for reflecting the aforementioned measurement laser light 211 is secured to the upper surface of the center portion of the upper portion 3a.

The arm 122, which is a rod-shaped member, is secured at its upper end to the lower portion 3d of the swing movement portion 3, and the stylus 121 is provided at the lower end of the arm 122 which extends downwardly. In the present embodiment, the stylus 121 is a spherical member having a diameter of about 0.3 mm to about 2 mm, for example, the arm 122 has a diameter of 0.7 mm, for example, and the length to the center of the stylus 121 from the portion of the arm 122 secured to the lower portion 3d is about 10 mm. These values are properly changed as required according to the shape of the surface 61 to be measured. Further, the swing movement portion 3 is preferably structured so that the center of gravity of the swing movement portion 3 is positioned below the apical end of the supporting point member 42 in the vertical direction, in order to cause the arm 122 to be directed in the vertical direction when the supporting point member 42 is fitted in the groove 41a and is coupled to the mounting platform 41.

Plural (four in the present embodiment) swing-side magnets 51 are held in the middle portion 3e of the swing movement portion 3. These swing-side magnets 51 are concentrically placed at equal angular intervals. The swing-side magnets 51 face non-swing-side magnets 52 included in the linear movement portion 6 in the upward and downward directions. Further, a through hole 3f in the upward and downward directions is formed at the center portion of the middle portion 3e, and the linear movement portion 6 is inserted through the through hole 3f. In order to allow the swing movement portion 3 to swing, the hole diameter of the through hole 3f is set to be sufficiently larger than the outer diameter of the linear movement portion 6.

The concrete structure of the swing movement portion 3 is not limited to that according to the present embodiment, provided that the swing movement portion 3 is placed on the mounting platform 41 so as to swing about a supporting point.

The linear movement portion 6 includes a straight rod-shaped or tube-shaped main body 6a extending in the upward and downward directions, the mounting platform 41 secured to the upper end of the main body 6a which is positioned within the main body 131 of the attachment portion 2, and the magnet holding portion 6b secured to the lower end of the main body 6a which is positioned below and outside the main body 131 of the attachment portion 2.

The main body 6a of the linear movement portion 6 is supported by the bearing portion 16 included in the attachment portion 2, so that it is capable of directly acting only in the vertical direction. The bearing portion 16 is provided with an air flow-in hole and an air exhaust hole, which are not illustrated. The main body 6a of the linear movement portion 6 is supported by a pneumatic bearing structure which does not contact with the bearing portion 16, formed by air supplied thereinto through the air flow-in hole and discharged through the air exhaust hole. With the pneumatic bearing structure, the linear movement portion 6 is prevented from inclining in the lateral direction (the horizontal direction), but the linear movement portion 6 can ascend and descend smoothly in the vertical direction.

The mounting platform 41 secured to the upper end of the main body 6a of the linear movement portion 6 has a rectangular parallelepiped shape extending in the direction of the X axis and, also, is provided, at the center of its upper surface, with the groove 41a in which the apical end of the supporting point member 42 is fitted. Further, in the present embodiment, a pair of movable-side magnets 71 are secured to the mounting platform 41 extended in the direction of the X axis, near the opposite ends thereof. These movable-side magnets 71 secured to the mounting platform 41 face the fixed-side magnets 72 secured to the supporting portion 131c in the aforementioned attachment portion 2 (positioned below the mounting platform 41) with an interval interposed therebetween in the direction of the Z axis along the vertical direction.

In the present embodiment, the movable-side magnets 71 in the linear movement portion 6 (the mounting platform 41) and the fixed-side magnets 72 in the attachment portion 2 (the supporting portion 131c) are secured in such directions that their repulsive forces act on each other. Namely, the movable-side magnets 71 and the fixed-side magnets 72 are secured in such attitudes that their same magnetic poles are opposed to each other. Due to the repulsive forces acting between the movable-side magnets 71 and the fixed-side magnets 72, a biasing force in the vertical upward direction acts on the linear movement portion 6. Due to the balance among the biasing force acting on the linear movement portion 6 due to the repulsive forces between the magnets 71 and 72, the weight of the linear movement portion 6 itself, and the force acting on the linear movement portion 6 through the connection mechanism 4 (all of which are directed in the vertical downward direction), the linear movement portion 6 moves in the upward and downward directions.

The placement of the movable-side magnets 71 in the linear movement portion 6 and the fixed-side magnets 72 in the attachment portion 2 in the upward and downward directions, and the magnetic force acting between the magnets 71 and 72 are not limited to those according to the present embodiment, as long as the biasing force in the vertical upward direction acts on the linear movement portion 6. For example, the movable-side magnets 71 in the linear movement portion 6 can be placed below the fixed-side magnets 72 in the attachment member 2 by changing their upward and downward placements from those according to the present embodiment, and an attractive force can be caused to act between the magnets 71 and 72, in order to apply a biasing force in the vertical upward direction to the linear movement portion 6. Alternatively, the movable-side magnets 71 in the linear movement portion 6 and the fixed-side magnets 72 in the attachment portion 2 can be placed so that a biasing force in the vertical upward direction acts on the linear movement portion 6, due to both a repulsive force and an attractive force.

Plural (four in the present embodiment) non-swing-side magnets 52 are secured to the magnet holding portion 6b which is secured to the lower end of the main body 6a of the linear movement portion 6. These non-swing-side magnets 52 are concentrically placed at equal angular intervals.

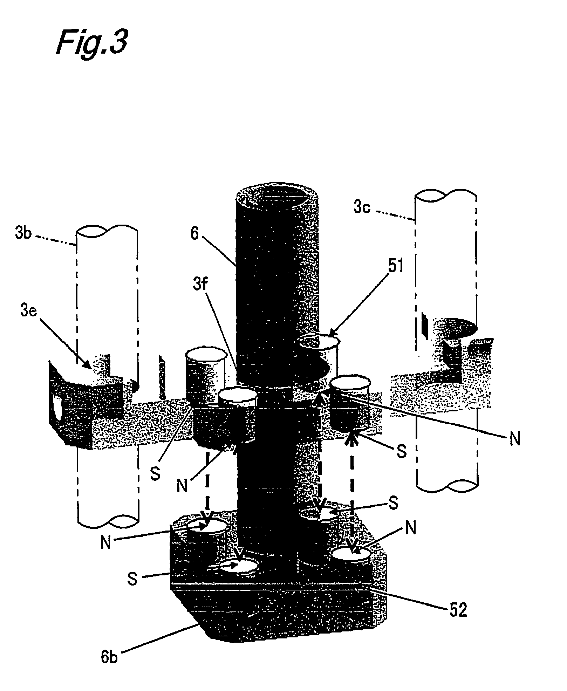

Referring to Fig. 3, the magnet holding portion 6b in the linear movement portion 6 is positioned below the middle portion 3e of the swing movement portion 3. Further, the four non-swing-side magnets 52 secured to the magnet holding portion 6b and the aforementioned four swing-side magnets 51 secured to the middle portion 3e of the swing movement portion 3 face each other with an interposed therebetween in the direction of the Z axis along the vertical direction.

Further, the swing-side magnets 51 and the non-swing-side magnets 52 are secured in such directions that an attractive force acts between each pair of the swing-side magnet 51 and the non-swing-side magnet 52. Namely, the swing-side magnets 51 and the non-swing-side magnets 52 are secured in such attitudes that their magnetic poles opposite from each other face each other. Due to the attractive force acting between the swing-side magnets 51 and the non-swing-side magnets 52, a biasing force in the downward direction of the Z axis along the vertical direction, acts on the swing movement portion 3 which holds the swing-side magnets 51, while a biasing force in the upward direction of the Z axis along the vertical direction, acts on the linear movement portion 6 which holds the non-swing-side magnets 52. Accordingly, due to the attractive force between the swing-side magnets 51 and the non-swing-side magnets 52, a force acts between the supporting point member 42 mounted to the swing movement portion 3 and the mounting platform 41 (placed under the supporting point member 42) mounted to the direct movement portion 6, in such a direction that the supporting point member 42 and the mounting platform 41 are pressed against each other. Therefore, even if a force in the vertical upward direction acts on the supporting point member 42 mounted to the swing movement portion 3, the apical end of the supporting point member 42 is maintained in the state where it is fitted in the groove 41a formed in the mounting platform 41 without being disengaged therefrom. This prevents the supporting point member 42 from being displaced by being influenced by the gravity and magnetic forces.

Referring to Fig. 3, in the present embodiment, the respective swing-side magnets 51 and the respective non-swing-side magnets 52 are placed so that the magnetic properties of the magnets adjacent to each other are oriented in directions opposite from each other. Firstly, regarding the swing-side magnets 51, the swing-side magnets 51 each in such an attitude that the N pole exists in the lower side (the S pole exists in the upper side) and the swing-side magnets 51 each in such an attitude that the S pole exists in the lower side (the N pole exists in the upper side) are alternately placed. Further, regarding the non-swing-side magnets 52, similarly, the non-swing-side magnets 52 each in such an attitude that the N pole exists in the lower side (the S pole exists in the upper side) and the non-swing-side magnets 52 each in such an attitude that the S pole exists in the lower side (the N pole exists in the upper side) are alternately placed. Further, the swing-side magnets 51 in such an attitude that their N poles exist in their lower sides and the non-swing-side magnets 52 in such an attitude that their S poles exist in their upper sides are opposed to each other and, also, the swing-side magnets 51 in such an attitude that their S poles exist in their lower sides and the non-swing-side magnets 52 in such an attitude that their N poles exist in their upper sides are opposed to each other, in order to cause an attractive force to act between the swing-side magnets 51 and the non-swing-side magnets 52, as described above. If the swing movement portion 3 tries to rotate in a horizontal direction about the apical end of the supporting point member 42 serving as the supporting point, the swing-side magnets 51 and the non-swing-side magnets 52 which generate repulsive forces acting on each other face each other, and these repulsive forces and the attractive force which has acted between the swing-side magnets 51 and the non-swing-side magnets 52 having been opposed to each other until the occurrence of the rotation function as a drag or a restoring force against the rotation of the supporting point member 42. As described above, the swing-side magnets 51 and the non-swing-side magnets 52 are placed in an alternate magnetic-pole manner, which can prevent the swing movement portion 3 from rotating in the horizontal direction about the apical end of the supporting-axis member 42. However, it is alternatively possible to place the swing-side magnets 51 and the non-swing-side magnets 52 in such a way that their magnetic properties are oriented in the same direction.

The linear movement portion 6 is held, in the vertical direction, in such a manner that it does not contact with the attachment portion 2 due to the repulsive forces between the movable-side magnets 71 and the fixed-side magnets 72. Further, the linear movement portion 6 is held, in the horizontal direction, in such a manner that it does not contact with the attachment portion 2 due to the pneumatic bearing formed by the bearing portion 16. Further, the swing movement portion 3 including the mirror 123 for reflecting the laser light 211 and the arm 122 including the stylus 121 is coupled to the linear movement portion 6 through the connection mechanism 4 so that the swing movement portion 3 can swing with respect to the linear movement portion 6. Namely, the linear movement portion 6, the connection mechanism 4, and the swing movement portion 3, which form the portion for scanning the surface 61 to be measured of the measuring object 60, are held in a state where they do not contact with the attachment portion 2. The portion for scanning the surface 61 to be measured of the measuring object 60 does not contact with the attachment portion 2 as described above and, therefore, is less prone to be influenced by vibrations and the like which are induced in the shape measurement device, thereby enabling measurements with extremely high precision.

The probe 101 according to the present embodiment includes a magnetic circuit portion 136 within the attachment portion 2. The magnetic circuit portion 136 includes two magnets 29a and 29b, a magnetic body ring 95 which couples the two magnets to each other, two yokes 8a and 8b, and a movable-side magnetic body 20.

The magnetic body ring 95 is secured to the inner peripheral wall of the main body 131 in the attachment portion 2. The magnets 29a and 29b each have a thin-plate shape, have an upper end secured to the magnetic body ring 95 and extend downwardly in the vertical direction. The yokes 8a and 8b are secured to the lower ends of the respective magnets 29a and 29b. The magnets 29a and 29b and the yokes 8a and 8b are placed symmetrically about the optical axis 211a of the measurement laser light 211 (which is coincident with the center axis of the attachment portion 2) when viewed in the direction of the Z axis. The movable-side magnetic body 20 has a thin and long rod shape extending in a horizontal direction and is secured to the upper surface of the mounting platform 41 mounted to the linear movement portion 6. The opposite ends of the movable-side magnetic body 20 face the magnets 29a and 29b in the horizontal direction with an interval interposed therebetween. The movable-side magnetic body 20 is provided with a through hole 20a in the thickwise direction at the center portion thereof in the longitudinal direction. The supporting member 42 is fitted in the groove 41a in the mounting platform 41 by passing through the hole 20a. The diameter of the hole 20a is set to be sufficiently larger than the outer diameter of the supporting member 42, which prevents the supporting point member 42 from interfering with the movable-side magnetic body 20 even if the supporting point member 42 is inclined due to the swing of the swinging member 3. The magnetic circuit portion 136 (the movable-side magnetic body 20) according to the present embodiment extends in a direction intersecting with the mounting platform 41 extending in the direction of the X axis, when viewed in the direction of the Z axis, and the mounting platform 41 and the magnetic circuit portion 136 are placed so that they form a cross shape when viewed in the direction of the Z axis.

The magnetic circuit portion 136 forms a magnetic circuit which extends from the magnet 29a on one side, passes through the yoke 8a, the movable-side magnetic body 20, the yoke 8b, the magnet 29b and the magnetic body ring 95, and returns to the magnet 29a. With this magnetic circuit, it is possible to prevent the linear movement portion 6 and the swing movement portion 3 (which is coupled to the linear movement portion 6 through the connection mechanism 4) from rotating together with each other in the horizontal direction (so-called accompanying rotation). More specifically, if the linear movement portion 6 and the swing movement portion 3 try to rotate in the horizontal direction, the magnetic circuit formed by the magnetic circuit portion 136 acts to restore the movable-side magnetic body 20 to the original rotational position, thereby preventing the accompanying rotation. Further, it is preferable that the movable-side magnetic body 20 is made of a magnetic material in order to form a magnetic circuit and, also, the mounting platform 41 to which the movable-side magnetic body 20 is attached is made of a non-magnetic material in order to prevent the mounting platform 41 from being influenced by magnetism. It is alternatively possible to employ a structure which does not include the magnetic circuit 136.

The probe 101 according to the present embodiment operates as follows.

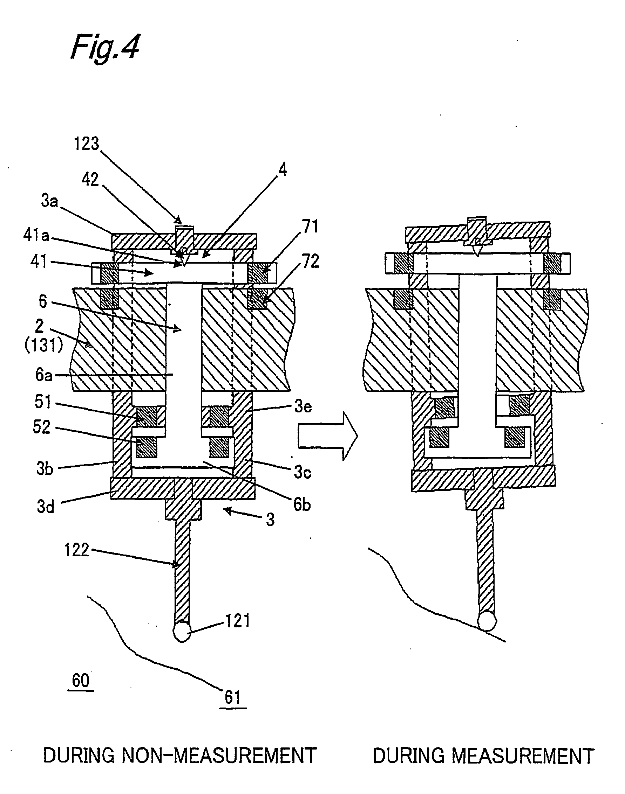

Firstly, there will be described a state where no measurement is performed in Fig. 4, namely, a state where the stylus 121 does not contact with the measuring object 60. Due to the attractive force between the swing-side magnets 51 and the non-swing-side magnets 52, a biasing force in the vertical downward direction acts on the swing movement portion 3. Due to this biasing force, the apical end of the supporting point member 42 is maintained in the state where it contacts with the deepest portion of the groove 41a in the mounting platform 41 at the center thereof, which prevents positional displacement of the swing movement portion 3 and the like with respect to the movable portion 6. Further, due to the attractive force between the swing-side magnets 51 and the non-swing-side magnets 52, a restoring force acts on the swing movement portion 3 so that the restoring force causes the swing movement portion 3 to be maintained at a neutral position causing the arm 122 to extend in the vertical direction. More specifically, if the swing movement portion 3 swings and its center axis is inclined, the distance between the swing-side magnets 51 and the non-swing-side magnets 52 increases and, due to the property of the magnets, a restoring force acts on the pair of magnets in such a direction that these magnets get closer to each other and, as a result, a restoring force acts on the swing movement portion 3 in such a direction that the inclination of the entire swing movement portion 3 is eliminated. Further, also in a case where the swing movement portion 3 rotates in a horizontal direction about the supporting point (the apical end of the supporting point member 42), a restoring force acts in such a direction that the rotation is eliminated, since the respective swing-side magnets 51 and the respective non-swing-side magnets 52 are placed so that the magnetic properties of the magnets adjacent to each other are oriented in directions opposite from each other, as described above. Due to these facts, when no measurement is performed, namely, in a state where the stylus 121 does not contact with the measuring object 60, the swing movement portion 3 is biased and maintained in such an attitude that the direction of the extension of the arm 122 is coincident with the vertical direction.

On the other hand, when no measurement is performed, the linear movement portion 6 in the vertical direction is held at a position which achieves a balance between the force in the vertical upward direction caused by the repulsive forces between the movable-side magnets 71 and the fixed-side magnets 72 and the force in the vertical downward direction as the sum of the weight of the linear movement portion 6 itself and the weight of the swing movement portion 3 itself which acts thereon through the connection mechanism 4.

Next, there will be described a state where a measurement is performed in Fig. 4. As will be described later in detail, the measurement of the shape of the surface 61 to be measured of the measuring object 60 is performed by pressing the stylus 121 mounted to the swing movement portion 3 against the surface 61 to be measured with a predetermined pressing force. This pressing force is obtained by slightly moving the attachment portion 2 toward the measuring object 60 from the state where the stylus 121 contacts with the surface 61 to be measured, and a reaction force (drag) from the surface 61 to be measured acts on the stylus 121 according to the pressing force. Due to the component in the horizontal direction out of this reaction force, the swing movement portion 3 is inclined about the supporting point (the apical end of the supporting member 42). Further, the component in the vertical direction out of the reaction force acts on the swing movement portion 3 in the vertical upward direction. By an amount corresponding to the component in the vertical direction (in the vertical upward direction) out of the reaction force, the swing movement portion 3 and the linear movement portion 6 are displaced together with each other with respect to the attachment portion 2, from the position in the balanced state where the stylus 121 does not contact with the measuring object 61, in the direction which decreases the repulsive forces between the movable-side magnets 71 and the fixed-side magnets 72, namely, in the vertical upward direction (in the upward direction along the direction of the Z axis. In short, the swing movement portion 3 and the linear movement portion 6 are displaced together in the vertical upward direction with respect to the measuring object 61, due to the component in the vertical direction out of the reaction force acting on the stylus 121. Further, the linear movement portion 6 and the swing movement portion 3 in the vertical direction are moved to positions which achieve a balance among the weight of the linear movement portion 6 itself, the weight of the swing movement portion 3 itself, the reaction force (the component in the vertical direction) acting on the swing movement portion 3 through the stylus 121, and the repulsive forces between the movable-side magnets 71 and the fixed-side magnets 72. Therefore, the apical end of the supporting point member 42 is maintained in the state of being pressed against the center of the groove 41a, which prevents the occurrence of positional displacements of the supporting point member 42 with respect to the mounting platform 41. As described above, the component in the vertical direction out of the reaction force acting from the surface 61 to be measured on the stylus 121, induces no positional displacement of the supporting point member 42 with respect to the mounting platform 41 and, therefore, even when the surface 61 to be measured has a shape similar to a horizontal surface, as well as when it has a substantially-vertical shape, the swing movement portion 3 can incline or move in the vertical upward direction by precisely following the shape of the surface 61 to be measured which is scanned by the stylus 121.

The probe 101 according to the present embodiment is structured so that it induces substantially the same amount of displacement with respect to the forces which act on the stylus 121 in the vertical direction and the horizontal direction. More specifically, in a case where a force of 0.3 mN (nearly equal to 30 mgf) acts on the stylus 121 in any of the vertical direction and the horizontal direction, the stylus 121 is displaced by an amount of about 10 micrometers. However, the probe 101 is not required to have substantially the same rigidity in both the vertical direction and the horizontal direction.

Next, there will be described the shape measurement device including the probe 101 according to the present embodiment.

Generally, a shape measurement device using a probe is adapted to bring the probe into contact with a measuring object, control the movement of the probe so that the contacting force is substantially constant for moving the probe along the surface to be measured of the measuring object, and measure and calculate the shape of the surface to be measured based on the positional relationship between the probe and a reference surface, utilizing a laser length measurement device and a reference plane mirror.

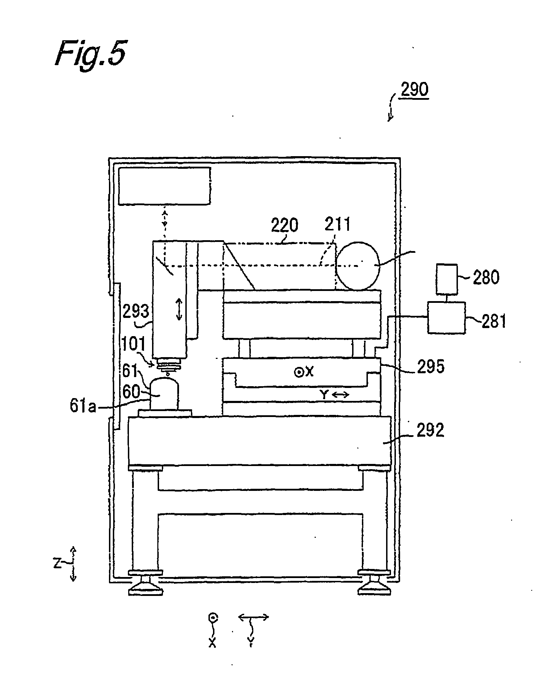

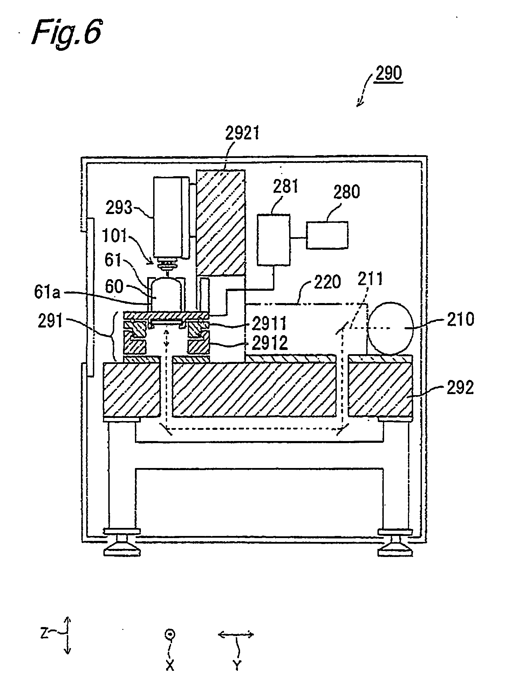

As such a shape measurement device, there is a shape measurement device 290 of a type which moves a probe in the direction of an X axis and in the direction of a Y axis through an XY-stage 295 and moves it in the direction of a Z axis through a Z- stage 293 while fixing a measuring object 60 on a stone surface plate 292, as illustrated in Fig. 5, namely, a type which moves the probe 101 in all the directions of the X axis, the Y axis and the Z axis, in order to perform measurements mainly on measuring objects with relatively larger sizes such as sizes of about 400 mm square. Further, there is a shape measurement device of a type which moves a stage 291 on which a measuring object 60 is placed in the directions of an X axis and a Y axis and also moves only a probe 101 in the direction of a Z axis by a Z-stage 293 as illustrated in Fig. 6, in order to perform measurements mainly on measuring objects with middle and small sizes, such as sizes equal to or smaller than about 200 mm square. In Figs. 5 and 6, like reference characters refer to similar components. The measurement device probe 101 according to the present embodiment is applicable to the shape measurement device of any of the types shown in Figs. 5 and 6.

Hereinafter, there will be described a case where the probe 101 according to the present embodiment is applied to the shape measurement device 290 in Fig. 6.

The shape measurement device 290 illustrated in Fig. 6 includes the stage 291 installed on the stone surface plate 292. The stage 291 includes an X-stage 2911 and a Y-stage 2912 which are movable in the directions of the X axis and the Y axis, respectively, which are orthogonal to each other in a plane. The measuring object 60 is placed on the stage 291, and is relatively moved with respect to the probe 101 in the direction of the X axis and in the direction of the Y axis. The Z-table 293 capable of moving the probe 101 in the direction of the Z axis is mounted to a supporting column 2921 erected on the stone surface plate 292, so that the Z-table 293 is movable in the direction of the Z axis. The X-stage 2911, the Y-stage 2912 and the Z-table 293 are driven by a driving unit 281, and the driving unit 281 is controlled by a control device 280.

Further, the shape measurement device 290 includes a laser light generator 210. The laser light generator 210 generates measurement laser light 211 (for example, oscillating frequency stabilized He-Ne laser light) for obtaining information about the position of the point (measurement point 61a) in the surface 61 to be measured which contacts with the stylus 121.

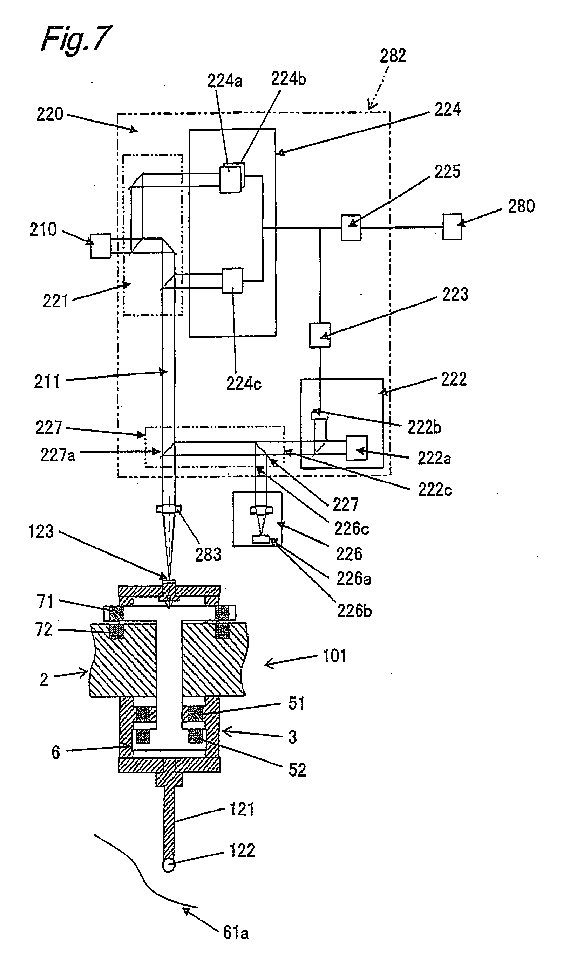

Further, the shape measurement device 290 includes a measurement point information determination section 220. Referring to Fig. 7, the measurement point information determination section 220 includes an optical system 221 for obtaining information about the position of the measurement point 61a in the surface 61 to be measured using the laser light 211 generated from the laser light generator 210, and a well-known laser length measuring unit 282 for performing a length measurement based on the interference between laser light from respective reference surfaces in the directions of the X axis, the Y axis and the Z axis and laser light from the measurement point 61a (laser light reflected by the mirror 123 in the swing movement portion 3). The laser length measuring unit 282 includes an inclination angle detecting section 222, a stylus position calculating section 223, a position coordinate measuring section 224, and an adder 225. The laser length measuring unit 282 is photoelectrically coupled to the optical system 221 and has the function of actually obtaining information about the position of the measurement point 61a

The measurement laser light 211 generated by the laser light generator 210 is divided into three laser light beams for X, Y and Z coordinates by the optical system 221, in order to determine the three-dimensional coordinates of the measurement point 61a in the surface 61 to be measured. One of the three laser light beams resulting from the division of the measurement laser light 211 is applied to a mirror which moves in the direction of the X axis together with the probe 101 and to an X-axis reference surface secured to the stone surface plate 292 (both of which are not illustrated), and these reflected light beams are guided to an X-axis coordinate measuring section 224a in the position coordinate measuring section 224. On the other hand, another one of the three laser light beams resulting from the division of the measurement laser light 211 is applied to a mirror which moves in the direction of the Y axis together with the probe 101 and to a Y-axis reference surface secured to the stone surface plate 292 (both of which are not illustrated), and these reflected light beams are applied to a Y-axis coordinate measuring section 224b in the position coordinate measuring section 224. Further, the remaining one of the three laser light beams resulting from the division of the measurement laser light 211 is applied to the mirror 123 in the swing movement portion 3 through a condenser lens 283 and, also, is applied to a Z-axis reference surface secured to the stone surface plate 292 (not illustrated), and these reflected light beams are directed to a Z-axis coordinate measuring section 224c in the position coordinate measuring section 224.

The X-axis coordinate measuring section 224a and the Y-axis coordinate measuring section 224b in the position coordinate measuring section 224 calculate the X coordinate and the Y coordinate of the probe 101, from signals of interference among the reflected light from the mirror 123 which changes its position and attitude along with the probe 101 and the reflected light beams from the X-coordinate reference surface and the Y-coordinate reference surface. Further, the Z-axis coordinate measuring section 224c in the position coordinate measuring section 224 calculates the Z coordinate of the probe 101, from signals of interference between the reflected light from the mirror 123 in the swing movement portion 3 and the reflected light from the Z-coordinate reference surface. In other words, the position coordinate measuring section 224 determines the amount of movement of the probe 101 using the X-axis reference surface, the Y-axis reference surface and the Z-axis reference surface as references. The principle of length measurement of this type using interference of laser light beams and the concrete structure therefor are well known and are described in Japanese Unexamined Patent Publication No. 1-170243 and Japanese Unexamined Patent Publication No. 10-170243, for example.

The inclination angle detecting section 222 detects the amount of inclination of the swing movement portion 3 which is induced by the contact of the stylus 121 with the surface 61 to be measured of the measuring object 60, by applying the laser light to the mirror 123 mounted to the swing movement portion 3. The inclination angle detecting section 222 is secured to the Z-table 293 to which the probe 101 is attached, and moves in the vertical direction (the direction of the Z axis) together with the Z-table 293. In the present embodiment, as laser light for detection of the inclination angle, inclination angle detection laser light 222c resulting from lasing by an inclination angle detection laser light lasing section 222a is used, in addition to the measurement laser light 211 resulting from lasing by the laser generator 210. The inclination angle detection laser light 222c which has been reflected back by the mirror 123 in the swing movement portion 3 is received by a light receiving section 222b, thereby detecting the inclination angle of the swing movement portion 3.

As described above, the X, Y and Z coordinates measured by the position coordinate measuring section 224 are obtained by length measurements of the amounts of movements along the respective axes, by using, as references, the mirrors installed on the respective axes. Particularly, for the length measurement along the Z axis, the change of the position of the mirror 123 installed in the swing movement portion 3 in the probe 101 in the direction of the Z axis is measured. However, there is actually no fixed positional relationship relatively between the mirror 123 and the portion of the stylus 121 which contacts with the surface 61 to be measured of the measuring object 60. Namely, the swinging member 3 to which the mirror 123 is attached is structured so that it is inclined about the apical end (the supporting point) of the supporting member 42. Accordingly, it is necessary that the X, Y and Z coordinates measured by the position coordinate measuring section 224 are corrected by the amount of inclination of the swing movement portion 3. This correction is performed by the stylus position calculating section 223. The stylus position calculating section 223 determines the amounts of corrections ($\Delta X$, $\Delta Y$, $\Delta Z$) of the position of the tip end of the stylus 121, from the inclination detected by the aforementioned inclination angle detecting section 222.

The supporting point member 42 in the swing movement portion 3 is located at a position fixed with respect to the mounting platform 41 in the linear movement portion 6, and the position of the supporting point (the apical end of the supporting point member 42) can be moved only in the vertical direction. Accordingly, it is possible to easily obtain information about the position of the supporting point, provided that information about the position in the vertical direction can be obtained from the light reflected by the mirror 123, which enables the stylus position calculating section 223 to execute calculations with high precision. When the position of the supporting point, namely, the position of the center of rotation of the swing movement portion 3, is unknown, no matter how precisely the inclination angle of the swing movement portion 3 can be determined, it is impossible to determine the center of rotation of the swing movement portion 3 only from the information about the inclination angle, eventually inducing errors in calculating information about the position of the stylus.

The adder 225 executes a calculation of adding the correction values ($\Delta X$, $\Delta Y$, $\Delta Z$) for the position of the tip end of the stylus 121 which have been calculated by the stylus position calculating section 223 to the respective X, Y and Z coordinate values (X, Y, Z) length measured by the position coordinate measuring section 224 so as to calculate the three-dimensional coordinates ($X+\Delta X$, $Y+\Delta Y$, $Z+\Delta Z$) of the measurement point 61a.

The shape measurement device 290 including the probe 101 is structured to include the two movable portions with respect to the direction of the Z axis (the vertical direction), namely, the Z-table 293 capable of moving the entire probe 101 in the direction of the Z axis, and the linear movement portion 6 movable within the probe 101. There is provided a focus detection section 226, as a structure for detecting the amount of the relative movement in the vertical direction (the direction of the Z axis) of the swing movement portion 3 to which the mirror 123 is mounted, together with the linear movement portion 6, with respect to the entire probe 101 and the Z-table 293, out of these two amounts of movements in the direction of the Z axis. Similarly to the inclination angle detecting section 222, the focus detection section 226 is secured to the Z-table 293 to which the probe 101 is attached, and moves in the vertical direction (the direction of the Z axis) along with the Z-table 293.

The focus detection section 226 is constituted by a focus detection laser light lasing section 226a, and a focus signal detecting section 226b for receiving focus laser light 226c which has been reflected back by the mirror 123 attached to the swing movement portion 3 after having being lased by the focus detection laser light lasing section 226a. The focus detection laser light lasing section 226a and the focus signal detecting section 226b are placed at the same position. For example, the focus detection section 226 can be structured by an integrated device constituted by a semiconductor laser as the focus detection laser light lasing section 226a and a light receiving device as the focus signal detecting section 226b. In this case, based on the deviation of the position of the focused light on the light receiving device in the integrated device, there are detected the amounts of relative movements of the linear movement portion 6 and the swing movement portion 3 to which the mirror 123 is attached, with respect to the entire probe 101 and the Z-table 293. Namely, with the focus detection section 226, it is possible to obtain the positional relationship of the linear movement portion 6 and the swing movement portion 3 to which the mirror 123 is attached, with respect to the entire probe 101 and the Z table 293, in the direction of the Z axis. In other words, with the focus detection section 226, it is possible to obtain the amounts of the movements of the swing movement portion 3 and the linear movement portion 6 in the vertical upward direction, with respect to the entire probe 101 and the Z-table 293.

The positional relationship of the swing movement portion 3 and the linear movement portion 6 with respect to the entire probe 101 and the Z-table 293 in the vertical direction (the amounts of relative movements of the swing movement portion 3 and the linear movement portion 6 with respect to the entire probe 101 and the Z-table 293 in the vertical direction), which are detected by the focus detection section 226, is used mainly for two applications. Firstly, the detected positional relationship therebetween in the vertical direction is used for focus control by the control portion 28 (control of the distance to the mirror 123 from the focus detection section 226 and the inclination angle detecting section 222). Secondly, from the detected positional relationship therebetween in the vertical direction, it is possible to determine the vertical component of the reaction force which acts on the stylus 121 from the surface 61 to be measured. Hereinafter, this will be described. When the stylus 121 is pressed against the surface 61 to be measured of the measuring object 60 with a predetermined pressing force, a reaction force from the surface 61 to be measured acts on the stylus 121. Further, by an amount of movement corresponding to the vertical component of the reaction force, the swing movement portion 3 and the linear movement portion 6 move in the vertical upward direction with respect to the entire probe 101 and the Z-table 293. Thus, there is a direct correlation between the vertical component of the reaction force which acts on the stylus 121 and the amounts of relative movements of the swing movement portion 3 and the linear movement portion 6 in the vertical upward direction with respect to the entire probe 101 and the Z-table 293. Accordingly, it is possible to calculate the vertical component of the reaction force which acts on the stylus 121, from the amounts of relative movements of the swing movement portion 3 and the linear movement portion 6 in the vertical upward direction with respect to the entire probe 101 and the Z-table 293, which are detected by the focus detection section 226. Further, it is possible to control the vertical component of the reaction force which acts on the stylus 121 from the surface 61 to be measured, by controlling the amounts of relative movements of the swing movement portion 3 and the linear movement portion 6 in the vertical upward direction with respect to the entire probe 101 and the Z-table 293, which are detected by the focus detection section 226.

The total of three laser light beams, namely, the measurement laser light 211, the inclination angle detection laser light 222c, and the focus laser light 226c are applied to the mirror 123. Therefore, there is provided a structure which prevents the three laser light beams from interfering with one another, by changing the wavelengths and the directions of polarization of the three laser light beams, and by using a combination of optical devices such as mirrors and prisms for merging and dividing the laser light beams which are included in a laser light dividing section 227.

The control portion 280 controls the movement of the probe 101 in the directions of the X axis, the Y axis and the Z axis, when scanning the surface 61 to be measured of the measuring object 60 with the stylus 121. As methods for this control, there are three types of modes, which are (1) a method for controlling it with the amounts of relative movements of the swinging member 3 and the linear movement portion 6 in the upward and downward directions, which are detected by the focus detection section 226, (2) a method for controlling it with the inclination angle of the swing movement portion 3 detected by the inclination angle detecting section 222, and (3) a method for controlling it with both the amounts of relative movements of the swing movement portion 3 and the linear movement portion 6 in the vertical direction, which are detected by the focus detection section 226, and the inclination angle of the swing movement portion 3 which is detected by the inclination angle detecting section 222.

(1) There will be described the method for control with the amounts of relative movements of the swing movement portion 3 and the linear movement portion 6 in the upward and downward directions, which are detected by the focus detection section 226. In this case, the focus detection section 226 detects the amounts of relative movements of the swing movement portion 3 and the linear movement portion 6 with respect to the Z-table 293 to which the probe 101 is attached. Further, these amounts are made constant and, thus, a measurement is performed while controlling the movement in the direction of the Z axis (the ascending and descending of the Z table 293) so that the force in the direction of the Z axis for pressing the stylus 121 against the surface to be measured, namely, the measurement force, is made constant. In this case, scanning is performed in the directions of the X axis and the Y axis, based on predetermined scanning paths and the like. By ascending or descending the Z-table 293 so that it follows the change of the measurement object 60 in the direction of the Z axis due to the scanning in the directions of the X axis and the Y axis, it is possible to perform a measurement in such a way as to maintain the measurement force in the direction of the Z axis constant along the surface 61 to be measured. In this case, the stylus position calculating section 223 utilizes the inclination angle of the stylus 121 which is detected by the inclination angle detecting section 222, which enables acquisition of information about the coordinates of the position of the measurement point 61 with high precision. However, when the surface 61 to be measured of the measuring object 60 is parallel with the vertical direction, no force in the vertical direction is applied to the stylus 121, which makes it impossible to detect the amounts of relative movements of the swing movement portion 3 and the linear movement portion 6 in the vertical direction with respect to the Z-table 293. Therefore, this method is effective in cases where measurements can be performed on the surface 61 to be measured from thereabove with the stylus 121, such as measurements of lens surfaces.

(2) There will be described the method for control with the inclination angle of the swing movement portion 3 which is detected by the inclination angle detecting section 222. In this case, the inclination angle of the swing movement portion 3 which is detected by the inclination angle detecting section 222 is made constant and, thus, measurements are performed while controlling the movements in the directions of the X axis and the Y axis (the horizontal movements of the X-stage 2911 and the Y-stage 2912) so that the force for pressing the stylus 121 against the surface 61 to be measured, namely, the measurement force, is made constant. In this case, scanning is performed in the direction of the Z axis using fixed scanning paths in the direction of the Z axis or using predetermined scanning paths and the like, while scanning is performed in the directions of the X axis and the Y axis according to the change of the surface 61 to be measured, which enables measurement of the shape of the measuring object 60 such as in a cylindrical surface. In this case, focus error signals are used for control of the position in the direction of the Z axis. The inclination angle detected by the inclination angle detecting section 222 is also used by the stylus position calculating section 223 as well as for the control of the movements in the directions of the X axis and the Y axis. This enables acquisition of information about the coordinates of the position of the measurement point 61a with high precision.

(3) There will be described the method for control using the amounts of relative movements of the swing movement portion 3 and the linear movement portion 6 in the vertical direction which are detected by the focus detection section 226, and also using the inclination angle of the swing movement portion 3 which is detected by the inclination angle detecting section 222. In this case, scanning is performed with the stylus 121 in the directions of the X axis and the Y axis using predetermined scanning paths, while controlling the movement in the direction of the Z axis (the ascending and descending of the Z-table 293), so that the reaction force acting on the stylus 121 from the surface 61 to be measured is made constant. As will be described later, the reaction force which acts on the stylus 121 from the surface 61 to be measured can be successively calculated. A reaction force F which acts on the stylus 121 against the measurement force due to pressing it against the surface 61 to be measured can be divided into a component force Fx in the horizontal direction and a component force Fz in the vertical direction. Specifically, there is established the relation expressed by an equation (1) below.

[Equation 1]

$$F = \sqrt{Fx^2 + Fz^2} \qquad (1)$$

The inclination of the swing movement portion 3 is caused by the component force Fx in the horizontal direction, and the movement of the linear movement portion 6 in the vertical direction is caused by the component force Fz in the vertical direction. Further, the amount of inclination of the swing movement portion 3 can be detected by the inclination angle detecting section 222, and the amount of movement of the linear movement portion 6 can be detected by the focus detection section 226. Accordingly, it is possible to calculate the component forces Fx and Fz from the inclination angle of the swing movement portion 3 which is detected by the inclination angle detecting section 222 and the amount of movement of the linear movement portion 6 which is detected by the focus detection section 226. The reaction force F can be calculated according to the aforementioned equation (1), using the component forces Fx and Fz.

Further, it is possible to detect the inclination angle at the position (the measurement point 61a) on the surface 61 to be measured which contacts with the stylus 121, from the component force Fx in the horizontal direction and the component force Fz in the vertical direction. It is also possible to control while changing the control method according to the inclination angle of the surface 61 to be measured.

In the probe 101 according to the present embodiment, the swing movement portion 3 to which the mirror 123 is attached is capable of moving in the vertical direction together with the linear movement portion 6 coupled thereto through the connection mechanism 4, as well as being capable of swinging about the apical end of the supporting member 42 serving as the supporting point. Accordingly, with the shape measurement device 290 including the probe 101, it is possible to perform measurements with high precision and a small measurement force, even when the surface 61 to be measured has a shape similar to a horizontal surface, as well as when it has a substantially vertical shape.

The present invention is applicable to a shape measurement device which performs, with high precision and a small measurement force, scan-measurements of surface shapes having arbitrary shapes, such as measurements of the circularities of side surfaces of lenses, the inclinations of the lens surfaces with respect to the lens side surfaces and positional deviations expressed by eccentricities, measurements of the internal surfaces and the diameters of holes having arbitrary shapes, and measurements of the shapes of external surfaces having arbitrary shapes. Further, the present invention is applicable to a probe included in such a shape measurement device.

**Claims**

1. A shape measurement device probe comprising:

    an attachment portion (2) for attachment to a shape measurement device (201);
    a linear movement portion (6) supported by the attachment portion so as to be linearly movable only in a vertical direction;
    a swing movement portion (3) including an arm (122) having at a tip end thereof a stylus (121) for contacting with a surface (61) to be measured of a measuring object (60);
    a connection mechanism (4) including a supporting point portion (42) provided in the swing movement portion and a mounting portion (41) provided in the linear movement portion for placing the supporting point portion thereon, and being adapted to connect the swing movement portion to the linear movement portion so that the swing movement portion can swing with the supporting point portion as a supporting point;
    a first biasing mechanism including a swing-side member (51) secured to the swing movement portion and a non-swing-side member (52) secured to the linear movement portion so as to be opposed to the swing-side member with an interval in the vertical direction, the swing-side member and the non-swing-side member being adapted to generate a magnetic attractive force for biasing the swing movement portion so that the arm is oriented in the vertical direction; and a second biasing mechanism including a movable-side member (71) secured to the linear movement portion and a fixed-side member (72) secured to the attachment portion so as to be opposed to the movable-side member with an interval in the vertical direction, the movable-side member and the fixed-side member being adapted to generate a magnetic force for biasing the linear movement portion upward in the vertical direction so that the linear movement portion is maintained to be in non-contact status with the attachment portion in the vertical direction.

2. The shape measurement device probe according to claim 1, wherein the mounting portion of the connection mechanism includes a conical groove (41a) in an upper portion,
wherein the supporting point portion of the connection mechanism includes a needle-shaped protrusion protruding downward in the vertical direction from the swing movement portion, and
wherein the swing movement portion is connected so as to swing with a contact portion of a deepest portion of the conical groove and an apical end of the supporting portion member as a center of swing.

3. The shape measurement device probe according to claim 1 or 2, wherein the swing-side member and the non-swing-side member are both formed of permanent magnets and are placed so that opposite magnetic poles face each other.

4. The shape measurement device probe according to claim 1 or 2, wherein one of the swing-side member and the non-swing-side member is formed of a permanent magnet and the other one of them is made of a magnetic material.

5. The shape measurement device probe according to any one of claims 1 to 4, wherein the movable-side member is positioned above the fixed-side member, and the movable-side member and the fixed-side member are placed so that opposite magnetic poles face each other for generating magnetic repulsive forces.

6. The shape measurement device probe according to any one of claims 1 to 4, wherein the movable-side member is positioned below the fixed-side member, and the movable-side member and the fixed-side member are placed so that same magnetic poles face each other for generating magnetic attractive forces.

7. The shape measurement device probe according to any one of claims 1 to 6, wherein the attachment portion includes a bearing portion (16) for supporting the linear movement portion in a manner of a non-contact pneumatic bearing structure so that the linear movement portion can move only in the vertical direction.

8. The shape measurement device probe according to any one of claims 1 to 7, further comprising a magnetic circuit portion (136) which forms a magnetic circuit resisting rotation of the linear movement portion in a horizontal direction about an axis thereof.

9. The shape measurement device probe according to any one of claims 1 to 8, wherein the swing movement portion includes a mirror (123) for reflecting a measurement laser.

10. A shape measurement device comprising:

the shape measurement device probe according to claim 9;
a vertical movement section (293) to which the shape measurement device probe is attached;
a focus detection section (226) which detects an amount of relative movement of the shape measurement device probe with respect to the vertical movement section in the vertical direction based on reflected light resulting from reflection of the measurement laser by the mirror; and
a measurement point information determination section (220) which detects an inclination angle of the swing movement portion of the shape measurement device probe with respect to the vertical direction based on the reflected light resulting from reflection of the measurements laser by the mirror, and which determines information about positions of measurement points where the stylus contacts with the surface to be measured.

**Patentansprüche**

1. Formmessvorrichtungssonde, mit:

einem Anbringungsabschnitt (2) zur Anbringung an einer Formmessvorrichtung (201),
einem Linearbewegungsabschnitt (6), der von dem Anbringungsabschnitt getragen wird, um linear in lediglich einer vertikalen Richtung beweglich zu sein,
einem Schwingbewegungsabschnitt (3) mit einem Arm (122), der an seiner Spitze einen Fühler (121) zum Kontaktieren mit einer Oberfläche (61) eines Messobjekts (60) hat, die zu messen ist,

einem Verbindungsmechanismus (4) mit einem Tragepunktabschnitt (42), der in dem Schwingbewegungsabschnitt vorgesehen ist, und einem Montierabschnitt (41), der in dem Linearbewegungsabschnitt vorgesehen ist, damit der Tragepunktabschnitt darauf platziert werden kann, wobei der Verbindungsmechanismus (4) dazu ausgestaltet ist, den Schwingbewegungsabschnitt mit dem Linearbewegungsabschnitt so zu verbinden, dass der Schwingbewegungsabschnitt mit dem Tragepunktabschnitt als Tragepunkt schwingen kann,

einem ersten Vorspannmechanismus mit einem schwingseitigen Element (51), das an dem Schwingbewegungsabschnitt befestigt ist, und einem nichtschwingseitigen Element (52), das an dem Linearbewegungsabschnitt befestigt ist, um dem schwingseitigen Element mit einem Abstand in der vertikalen Richtung gegenübergestellt zu sein, wobei das schwingseitige Element und das nicht-schwingseitige Element dazu ausgestaltet sind, eine magnetische Anziehungskraft zum Vorspannen des Schwingbewegungselements zu erzeugen, so dass der Arm in der vertikalen Richtung orientiert ist, und

einem zweiten Vorspannmechanismus mit einem bewegungsseitigen Element (71), das an dem Linearbewegungsabschnitt befestigt ist, und einem festseitigen Element (72), das an dem Anbringungsabschnitt befestigt ist, um dem Bewegungsseitenelement mit einem Abstand in der vertikalen Richtung gegenübergestellt zu sein, wobei das bewegungsseitige Element und das festseitige Element dazu ausgestaltet sind, eine magnetische Kraft zum Vorspannen des Linearbewegungsabschnitts aufwärts in der vertikalen Richtung zu erzeugen, so dass der Linearbewegungsabstand in einem Nicht-Kontakt-Status mit dem Anbringungsabschnitt in der vertikalen Richtung gehalten wird.

2. Formmessvorrichtungssonde nach Anspruch 1, wobei der Montierabschnitt des Verbindungsmechanismus eine konische Nut (41 a) in einem oberen Abschnitt aufweist,

wobei der Tragepunktabschnitt des Verbindungsmechanismus einen nadelförmigen Vorsprung aufweist, der sich in der vertikalen Richtung abwärts von dem Schwingbewegungsabschnitt erstreckt, und

wobei der Schwingbewegungsabschnitt derart verbunden ist, dass er mit einem Kontaktabschnitt eines tiefsten Abschnitts der konischen Nut schwingt und ein apikales Ende des Trageabschnittelements als ein Schwingzentrum vorhandan ist.

3. Formmessvorrichtungssonde nach Anspruch 1 oder 2,

wobei das schwingseitige Element und das nichtschwingseitige Element beide als Permanentmagneten ausgebildet und so platziert sind, dass entgegengesetzte magnetische Pole einander gegenüber liegen.

4. Formmessvorrichtungssonde nach Anspruch 1 oder 2,

wobei das schwingseitige Element oder das nichtschwingseitige Element als ein Permanentmagnet ausgebildet ist und das nicht-schwingseitige Element bzw. das schwingseitige Element als ein magnetisches Material ausgeführt ist.

5. Formmessvorrichtungssonde nach einem der Ansprüche 1 bis 4,

wobei das bewegungsseitige Element oberhalb des festseitigen Elements positioniert ist und das bewegungsseitige Element und das festseitige Element so platziert sind, dass entgegengesetzte magnetische Pole einander gegenüber liegen, um abstoßende magnetische Kräfte zu erzeugen.

6. Formmessvorrichtungssonde nach einem der Ansprüche 1 bis 4,

wobei das bewegungsseitige Element unterhalb des festseitigen Elements positioniert ist und das bewegungsseitige Element und das festseitige Element so platziert sind, dass gleiche magnetische Pole zur Erzeugung von magnetischen Anziehungskräften einander gegenüber liegen.

7. Formmessvorrichtungssonde nach einem der Ansprüche 1 bis 6,

wobei der Anbringungsabschnitt einen Lagerabschnitt (16) zum Tragen des Linearbewegungsabschnitts in einer Weise einer pneumatischen Nicht-Kontakt-Lagerstruktur trägt, so dass der Linearbewegungsabschnitt sich lediglich in der vertikalen Richtung bewegen kann.

8. Formmessvorrichtungssonde nach einem der Ansprüche 1 bis 7,

ferner mit einem magnetischen Kreisabschnitt (136), der einen magnetischen Kreis bildet, der einer Rotation des Linearbewegungsabschnitts in einer horizontalen Richtung um eine Achse davon widersteht.

9. Formmessvorrichtung nach einem der Ansprüche 1 bis 8,

wobei der Schwingbewegungsabschnitt einen Spiegel (123) zum Reflektieren eines Messlasers aufweist.

**10.** Formmessvorrichtung mit:

der Formmessvorrichtung nach Anspruch 9,
einem vertikalen Bewegungsabschnitt (293), an dem die Formmessvorrichtungssonde angebracht ist,
einem Fokuserfassungsabschnitt (226), der ein Ausmaß einer relativen Bewegung der Formmessvorrichtungssonde hinsichtlich des vertikalen Bewegungsabschnitts in der vertikalen Richtung auf Basis von reflektiertem Licht erfasst, das von einer Reflexion des Messlasers durch den Spiegel resultiert, und
einem Messpunktinformationsbestimmungsabschnitt (220), der einen Neigungswinkel des Schwingbewegungsabschnitts der Formmessvorrichtungssonde hinsichtlich der vertikalen Richtung auf Basis des reflektierten Lichts bestimmt, das von einer Reflexion des Messlasers durch den Spiegel resultiert, und das Information hinsichtlich von Positionen von Messpunkten bestimmt, an denen der Fühler mit der zu messenden Oberfläche kontaktiert.

**Revendications**

**1.** Sonde d'un dispositif de mesure de forme comprenant :

une partie de fixation (2) à fixer à un dispositif (201) de mesure de forme ;
une partie (6) de mouvement linéaire supportée par la partie de fixation de manière à ne se déplacer linéairement que dans une direction verticale ;
une partie (3) de mouvement oscillant comportant un bras (122) ayant à son extrémité de pointe un stylet (121) à mettre en contact avec une surface (61) à mesurer d'un objet de mesure (60) ;
un mécanisme de raccordement (4) comportant une partie de point de support (42) prévue dans la partie de mouvement oscillant et une partie de montage (41) prévue dans la partie de mouvement linéaire pour placer la partie de point de support dessus, et étant adapté pour raccorder la partie de mouvement oscillant à la partie de mouvement linéaire de sorte que la partie de mouvement oscillant puisse osciller avec la partie de point de support en tant que point de support ;
un premier mécanisme de polarisation comportant un élément (51) côté oscillant fixé à la partie de mouvement oscillant et un élément (52) côté non oscillant fixé à la partie de mouvement linéaire de manière à être opposé à l'élément côté oscillant avec un intervalle dans la direction verticale, l'élément côté oscillant et l'élément côté non oscillant étant adaptés pour générer une force d'attraction magnétique destinée à polariser la partie de mouvement oscillant de sorte que le bras soit orienté dans la direction verticale ; et
un deuxième mécanisme de polarisation comportant un élément (71) côté mobile fixé à la partie de mouvement linéaire et un élément (72) côté fixe fixé à la partie de fixation de manière à être opposé à l'élément côté mobile avec un intervalle dans la direction verticale, l'élément côté mobile et l'élément côté fixe étant adaptés pour générer une force magnétiques destinée à polariser la partie de mouvement linéaire vers le haut dans la direction verticale de sorte que la partie de mouvement linéaire soit maintenue pour se trouver dans un état sans contact avec la partie de fixation dans la direction verticale.

**2.** Sonde de dispositif de mesure de forme selon la revendication 1, dans laquelle la partie de montage du mécanisme de raccordement comporte une rainure conique (41a) dans une partie supérieure,
où la partie de point de support du mécanisme de raccordement comporte une protubérance en forme d'aiguille saillant vers le bas dans la direction verticale de la partie de mouvement oscillant, et
où la partie de mouvement oscillant est raccordée de manière à osciller avec une partie de contact de la partie la plus profonde de la rainure conique et une extrémité apicale de l'élément de point de support en tant que centre d'oscillation.

**3.** Sonde de dispositif de mesure de forme selon la revendication 1 ou 2, dans laquelle l'élément côté oscillant et l'élément côté non oscillant sont formés d'aimants permanents et sont placés de sorte que les pôles magnétiques opposés se regardent.

**4.** Sonde de dispositif de mesure de forme selon la revendication 1 ou 2, dans laquelle l'un de l'élément côté oscillant et de l'élément côté non oscillant est formé d'un aimant permanant et l'autre d'entre eux est réalisé en matériau magnétique.

**5.** Sonde de dispositif de mesure de forme selon l'une quelconque des revendications 1 à 4, dans laquelle l'élément côté mobile est positionné au dessus du l'élément côté fixe, et l'élément côté mobile et l'élément côté fixe sont placés de sorte que les pôles magnétiques opposés se regardent pour générer des forces de répulsion magnétiques.

**6.** Sonde de dispositif de mesure de forme selon l'une quelconque des revendications 1 à 4, dans laquelle l'élément côté mobile est positionné au dessous de l'élément côté fixe, et l'élément côté mobile et l'élément côté fixe sont placés de sorte que les mêmes pôles magnétiques se regardent pour générer des forces d'attraction magnétiques.

7. Sonde de dispositif de mesure de forme selon l'une quelconque des revendications 1 à 6, dans laquelle la partie de fixation comporte une partie de roulement (16) destinée à soutenir la partie de mouvement linéaire de la manière d'une structure de roulement pneumatique sans contact de sorte que la partie de mouvement linéaire puisse se déplacer seulement dans la direction verticale.

8. Sonde de dispositif de mesure de forme selon l'une quelconque des revendications 1 à 7, comprenant en outre une partie (136) de circuit magnétique qui forme un circuit magnétique résistant à la rotation de la partie de mouvement linéaire dans une direction horizontale autour d'un axe de celle-ci.

9. Sonde de dispositif de mesure de forme selon l'une quelconque des revendications 1 à 8, dans laquelle la partie de mouvement oscillant comporte un miroir (123) pour réfléchir un laser de mesure.

10. Dispositif de mesure de forme comprenant :

une sonde de dispositif de mesure de forme selon la revendication 9 ;
un tronçon (293) de mouvement vertical auquel la sonde de dispositif de mesure de forme est fixée ;
un tronçon (226) de détection de foyer qui détecte une grandeur du mouvement relatif de la sonde du dispositif de mesure de forme par rapport au tronçon de mouvement vertical dans la direction verticale sur la base de la lumière réfléchie résultant de la réflexion du laser de mesure par le miroir ; et
un tronçon (220) de détermination d'informations de point de mesure qui détecte un angle d'inclinaison de la partie de mouvement oscillant de la sonde du dispositif de mesure de forme par rapport à la direction verticale sur la base de la lumière réfléchie résultant de la réflexion du laser de mesure par le miroir, et qui détermine des informations concernant des positions de points de mesure où le stylet est mis en contact avec la surface à mesurer.

*Fig.1*

## Fig.2

Fig.3

*Fig.4*

DURING NON-MEASUREMENT          DURING MEASUREMENT

*Fig.5*

## Fig.6

*Fig.7*

Fig.8

PRIOR ART

*Fig.9*

PRIOR ART

## REFERENCES CITED IN THE DESCRIPTION

**Patent documents cited in the description**

- WO 2007135857 A
- WO 200713585 A
- JP 2006284410 B
- US 20070126314 A
- JP 1170243 A
- JP 10170243 A